Europäisches Patentamt

(19) European Patent Office

Office européen des brevets

(11) Publication number : **0 449 868 B1**

# EUROPEAN PATENT SPECIFICATION

(12)

(45) Date of publication of patent specification :
21.07.93 Bulletin 93/29

(51) Int. Cl.⁵ : **B21B 1/00,** B21B 37/00,
B21B 45/02

(21) Application number : 90900244.6

(22) Date of filing : 13.12.89

(86) International application number :
PCT/GB89/01491

(87) International publication number :
WO 90/06821 28.06.90 Gazette 90/15

(54) THE OPERATION OF A MULTI-STAND HOT ROLLING MILL.

(30) Priority : 15.12.88 GB 8829272

(43) Date of publication of application :
09.10.91 Bulletin 91/41

(45) Publication of the grant of the patent :
21.07.93 Bulletin 93/29

(84) Designated Contracting States :
AT BE CH DE ES FR GB IT LI LU NL SE

(56) References cited :
EP-A- 0 024 849

(73) Proprietor : DAVY McKEE (SHEFFIELD)
LIMITED
Prince of Wales Road
Sheffield S9 4EX Yorkshire (GB)

(72) Inventor : HEWITT, Ewan, Christian
Ash Cottage Clarendon Road
Sheffield Yorkshire (GB)

(74) Representative : Kirk, Geoffrey Thomas
BATCHELLOR, KIRK & CO. 2 Pear Tree Court
Farringdon Road
London EC1R 0DS (GB)

EP 0 449 868 B1

Jouve, 18, rue Saint-Denis, 75001 PARIS

## Description

This invention relates to a method of operating a multi-stand rolling mill for rolling hot metal strip according to the precharacterising part of claim 1.

In the manufacture of metal strip, it is usual to reduce a hot metal workpiece down to strip by passing it, while hot, through the stands of a finishing mill. There are usually at least six stands arranged in tandem and the hot workpiece is progressively reduced in thickness as it is passed through the stands.

To ensure that the strip, assuming it to be of steel, has the required metallurgical properties, it is necessary for the target finishing temperature of the strip as it leaves the last stand to be typically 870°C.

In a conventional hot strip mill with a delay table between the roughing and finishing mills, there is a considerable temperature differential between the head and tail ends of the workpiece as each enters the first stand of the finishing mill and care has to be taken to ensure that the temperature of the strip along its length is at, or close to, the target finishing temperature on exit from the last stand.

Furthermore, the consequence of this falling entry temperature is that the rolling loads at the mill stands increase as the workpiece is rolled, even when the mill is accelerated to keep the finishing temperature constant. As a result, the rolls of the stands tend to deflect progressively as the workpiece passes through the mill and this leads to a change in strip profile. By the expression "strip profile" is meant the variation in thickness of the strip between its centre and positions close to its lateral edges.

The mill has to be operated at a relatively slow speed, known as the threading speed, as the head of the workpiece passes through the stand and is attached to a coiler located downstream of the last stand and, thereafter, the speed of the mill is increased to its rolling speed.

It is disclosed in the specification of European Patent No. 0024849 to operate a multi-stand hot rolling mill where, during threading, the rolling load at each stand is set to ensure that the required output profile at the last stand is obtained and the rolling temperature at the last stand is at, or close to, a predetermined level. The speed of rolling is increased and cooling liquid is applied to the workpiece at one or more interstand locations to cool it, such that the rolling temperature at the last stand remains at, or close to, the predetermined level. At each interstand location where the coolant is applied, the quantity of coolant is such that the rolling load of the next stand downstream of the location remains substantially equal to that set up during threading.

However, in certain circumstances, it may not be desirable to keep the rolling load of each stand substantially equal to that set up during threading. If the profile of the strip is detected to have changed from what is desired, it is necessary to be able to quickly change the rolling load on one or more of the stands in order to influence the profile of the strip leaving that stand.

An object of the present invention is to provide a means of controlling finishing temperature along the length of the workpiece and, at the same time, to provide a means for controlling strip profile along the length of the workpiece.

According to the present invention, in a method of operating a multi-stand hot rolling mill, the head end of a hot metal workpiece is threaded at a relatively slow speed through the stands of the rolling mill and the rolling load at each stand is set to ensure that the required profile of the strip at the last stand is obtained and the rolling temperature at the last stand is at or close to a predetermined level; the speed of rolling is then increased and cooling liquid is applied to the workpiece at interstand locations to cool it, such that the rolling temperature at the last stand remains at or close to said predetermined level; characterised in that the profile of the strip leaving the last stand is detected and variation from the required profile is used to control the amount of interstand cooling during rolling to change the rolling load at one or more of the stands in the sense to change the profile of the strip leaving the last stand to the required form.

The interstand cooling may be changed between forward and reverse modes during rolling of the workpiece. The amount of liquid coolant applied at the or each interstand location by be progressively increased to a maximum prior to liquid being applied at the adjacent interstand location.

Interstand cooling in the forward mode comprises applying liquid coolant between a pair of the early stands of the mill and then, when a predetermined flow is achieved, applying coolant at the next interstand location in the downstream direction and so on.

Interstand cooling in the reverse mode comprises applying liquid coolant between a pair of the later stands of the mill and then, when a predetermined flow is achieved, applying coolant at the next interstand location in the upstream direction and so on.

The liquid coolant may be applied to only a part of the width of the strip at the or each location.

The invention can also be used to control strip profile in conjunction with work roll bending devices and/or axially movable work and intermediate rolls. The latter are essentially a mill set-up function, whereas work roll bending can be used dynamically down the workpiece length to counteract the influence of variations in rolling loads on strip profile. Where roll bending is employed, it is a purpose of this invention to give the roll bending a greater range control in initially setting up the head end bending loads by relieving the work roll bending system entirely, or partially, of the need to respond to variation in rolling loads down the length of the workpiece. This is brought about by modifying the normal amount of change in rolling load by varying the manner in which the interstand cooling is applied progressively down the workpiece.

The interstand cooling may be used in conjunction with roll coolant sprays where the water flow remains constant across the width of the workpiece contacting parts of the rolls and is not varied during the rolling of the length of the workpiece, or it may be used in conjunction with roll coolant sprays which can have their flow rate varied across the width of the workpiece contacting parts of the rolls in order to influence work roll thermal camber and which are varied during the rolling of the length of the workpiece to influence thermal camber growth.

The invention can apply equally to mills employing at the ingoing side (1) an open delay table; (2) to mills using a heat shield such as ENCOPANELS surrounding the workpiece on the delay table; (3) to mills employing a STELCO coilbox. It will be appreciated that, with mills employing either ENCOPANELS or a STELCO coilbox, the temperature differential between the head and tail ends of the workpiece as it enters the first stand F1 is less than on mills where the delay table is unshielded. As a result, such mills must use more interstand cooling to achieve a given rate of acceleration, but these mills also tend to achieve more constant temperature and rolling loads down the workpiece length.

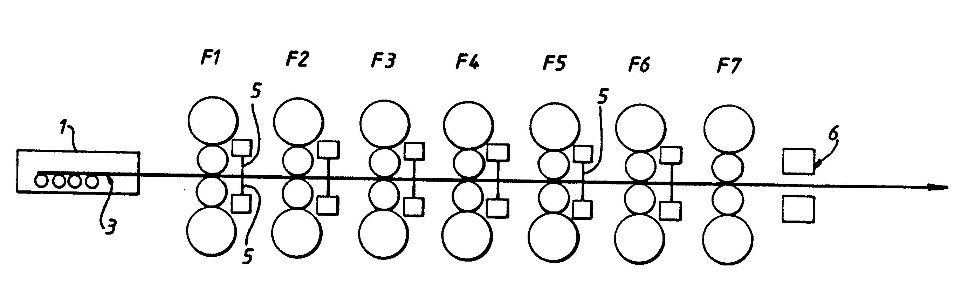

For the purpose of describing the invention, reference will be made to Figure 1 of the accompanying drawings which shows a hot strip mill employing an ENCOPANEL system 1 on its delay table 3 and seven finishing stands F1 to F7. Means for supplying variable flow interstand curtains 5 of liquid coolant are located downstream of stands F1 to F6, inclusive. Each interstand curtain 5 is in two parts engaging respective opposite faces of the workpiece. Those downstream of F1 and F2 can be used, if desired, to suppress the formation of secondary scale by applying of the order of 20% of their maximum flow rate to chill the strip surface enough to slow down the rate of oxidation. The remaining curtains can be used to control finishing temperature by variation of the flow rate to compensate for the effect of variations in incoming workpiece temperatures and variations in rolling speed. A profile detector 6 is located downstream of the last stand.

At the head end of the workpiece, it may be decided to apply the initially required amount of cooling water by first bringing in either the pair of curtains after stand F5 or the curtains after F3. In either case, more curtains are brought in as extra water is required during mill acceleration.

Where very high rates of acceleration are required, it may be necessary, to achieve correct finishing temperatures, to increase the flow rate of the curtains downstream of F1 and F2 to amounts greater than those needed simply for scale suppression.

In order to describe the invention, it will be assumed that all six pairs of curtains are used for temperature and load control. The amount of water needed downstream of F1 and F2 for scale suppression will be ignored for the purpose of example.

It will be readily understood that the method of application of water could be either "forward mode" in which water is first applied downstream of F1 cascading towards F6 or "reverse mode" in which water is first applied to one of the downstream stands, such as F5, and then cascading towards F1.

The choice of method, whilst giving correct finishing temperature in both instances, can influence rolling load and roll bite temperature considerably, as shown by the results set out in the Table of the following Example:-

EXAMPLE

Consider a low carbon steel workpiece, 79,5528m (261') long, 1,4732m (58") wide and 32,4358mm (1.277") thick, passing through the ENCOPANEL system and reaching the finishing mill with the front end at 1045°C and the tail end at 1029°C. This is typical of what can be achieved by a 87,7824m (288') long ENCOPANEL system with all the panels in use.

The workpiece is progressively reduced in the seven finishing stands to 2,54mm (0.100") to give a temperature at the finishing pyrometer of 870°C. In order to achieve this, the front end is threaded at 685,4952m/min (2249 fpm) and, after some 6,4008m (21') of the workpiece have been rolled, the mill is accelerated to reach a tail end speed of 886,3548m/min (2908 fpm). Without interstand cooling, such a schedule would give a front end finishing temperature of 883°C and a tail end temperature of 907°C but, by applying approximately 5,800 litres of cooling water per minute after F1 at the head end and a total of 21,000 lpm after stands F1, F2 and F3 at the tail end, the correct 870°C finishing temperature is achieved. However, the strip profile may not be satisfactory.

The rolling loads, strip temperatures and required water quantities at each stand for the head and tail ends for cooling in both forward and reverse modes are set out in the following Table:-

EP 0 449 868 B1

TABLE

| Stand No. | Forward Mode Entry Temp. °C | Load tons | lpm | Reverse Mode Entry Temp. °C | Load tons | lpm |
|---|---|---|---|---|---|---|
| **Head End** | | | | | | |
| F1 | 1013 | 2198 |  | 1013 | 2198 | - |
| F2 | 985 | 1998 | 5800 | 1006 | 1921 | - |
| F3 | 973 | 1803 | - | 992 | 1735 | - |
| F4 | 958 | 1516 | - | 976 | 1456 | - |
| F5 | 939 | 1275 | - | 955 | 1226 | - |
| F6 | 917 | 1014 | - | 917 | 1014 | 4800 |
| F7 | 893 | 806 | - | 893 | 806 | - |
| Pyro | 870 | - | - | 870 | - | - |
| **Tail End** | | | | | | |
| F1 | 1004 | 2298 |  | 1004 | 2298 | - |
| F2 | 997 | 2078 | 9000 | 1003 | 1977 | - |
| F3 | 946 | 1967 | 9000 | 995 | 1778 | - |
| F4 | 935 | 1668 | 3000 | 984 | 1480 | - |
| F5 | 923 | 1396 | - | 949 | 1306 | 7400 |
| F6 | 907 | 1098 | - | 907 | 1098 | 9000 |
| F7 | 888 | 868 | - | 888 | 867 | - |
| Pyro | 870 | - | - | 870 | - | - |

It can be seen that reverse mode cooling, where coolant is first applied after stand F5 and when maximum flow is reached additional cooling is applied after F4, produces the same outgoing temperature as forward mode cooling but the loads on some of the stands are reduced.

The range of rolling load control at each stand, depending on the mode of water application, is, therefore, the number of tons shown below:-

|  | F1 | F2 | F3 | F4 | F5 | F6 | F7 |
|---|---|---|---|---|---|---|---|
| Head | 0 | 77 | 68 | 60 | 49 | 0 | 0 |
| Tail | 0 | 101 | 189 | 188 | 90 | 0 | 0 |

It will be observed that the loads in F6 and F7 are not changed by varying the mode of water application

4

and, as a result, the strip profile will not be influenced at these two stands. However, the range of control at F2 to F5 is large enough as a proportion of the mill load to influence strip profile leaving F5 to a major degree.

Changing from reverse mode to forward mode progressively would increase rolling loads down the workpiece by the percentages as set out below:-

| F1 | F2 | F3 | F4 | F5 | F6 | F7 |
|---|---|---|---|---|---|---|
| 4.5 | 8.2 | 13.4 | 14.6 | 13.9 | 8.3 | 7.7 |

Changing from forward mode to reverse mode would change rolling loads by the percentages shown below:-

| F1 | F2 | F3 | F4 | F5 | F6 | F7 |
|---|---|---|---|---|---|---|
| +4.5 | −1.1 | −1.4 | −2.4 | +2.4 | +8.3 | +7.7 |

It is, therefore, possible to choose the amount of rolling load increase to lie anywhere between these two limits in order to control strip profile.

In a stand, a change of 100 tons in the rolling load will typically alter the strip profile by 10 $\mu$m. Thus the range of change of profile in $\mu$m out of each stand that can be obtained in this example by switching modes of coolant is shown below:-

| | F1 | F2 | F3 | F4 | F5 | F6 | F7 |
|---|---|---|---|---|---|---|---|
| Head | 0 | 7.7 | 6.8 | 6.0 | 4.9 | 0 | 0 |
| Tail | 0 | 10.1 | 18.9 | 18.8 | 9.0 | 0 | 0 |

In addition, where roll coolant flow is controllable, it is possible to select a rate of change of roll coolant down the workpiece so as to achieve a change of work roll thermal profile such that the effect of the interstand cooling application strategy on strip profile is within the desired limits.

Depending upon the particular rolling schedule and the particular amount of acceleration required, it will be possible to control strip profile either just by changing the mode of application of interstand cooling or by doing this whilst, at the same time, changing the amount of roll coolant application. The use of the two methods in conjunction could allow a higher rate of acceleration to be employed without running out of strip profile control capability.

It is possible to provide cooling immediately upstream of the first stand and immediately downstream of the last stand.

Likewise, it would be possible to vary the effective width of the curtains to spray either a central portion or the whole width of the strip.

The words ENCOPANEL and STELCO are Trade Marks.

## Claims

1. A method of operating a multi-stand hot rolling mill in which the head end of a hot metal workpiece is threaded at a relatively slow speed through the stands (F1,F2,F3,F4,F5,F6,F7) of the rolling mill and the rolling load at each stand is set to ensure that the required profile of the strip at the last stand (F7) is obtained and the rolling temperature at the last stand is at or close to a predetermined level; the speed of rolling is then increased and cooling liquid is applied to the workpiece at interstand locations to cool it, such that the rolling temperature at the last stand remains at or close to said predetermined level; characterised in that the profile of the strip leaving the last stand is detected and variation from the required profile is used to control the amount of interstand cooling during rolling to change the rolling load at one or more of the stands in the sense to change the profile of the strip leaving the last stand to the required form.

2. A method as claimed in claim 1, characterised in that the interstand cooling is changed between forward and reverse modes during rolling of the workpiece.

3. A method as claimed in claim 2, characterised in that the amount of liquid applied at the or each interstand location is progressively increased to a maximum prior to the liquid being applied at an adjacent interstand location.

4. A method as claimed in any preceding claim, characterised in that the liquid is applied in the form of a curtain (5) extending over the width of the strip.

5. A method as claimed in any preceding claim, characterised in that the liquid coolant is applied to only part of the width of the strip at the or each location.

6. A method as claimed in any preceding claim, characterised in that liquid coolant is applied to the mill rolls.

7. A method as claimed in claim 6, characterised in that the flow rate of the liquid applied to the rolls is varied across the width of the rolls.

8. A method as claimed in any preceding claim, characterised in that work roll bending is applied to work rolls of one or more of the stands.

## Patentansprüche

1. Verfahren zum Betrieb einer Warmwalzstraße mit mehreren Walzgerüsten, bei welcher das Kopfende eines warmen Metallwerkstückes bei einer relativ niedrigen Geschwindigkeit durch die Walzgerüste (F1, F2, F3, F4, F5, F6, F7) der Walzstraße eingezogen wird und die Walzkraft an jedem Walzgerüst so eingestellt ist, daß gewährleistet ist, daß man das gewünschte Profil des Streifens am letzten Walzgerüst (F7) erhält und die Walztemperatur am letzten Walzgerüst auf oder nahe einem vorbestimmten Wert liegt, die Walzgeschwindigkeit anschließend erhöht wird und eine Kühlflüssigkeit auf das Werkstück zu dessen Kühlung an Stellen zwischen den Walzgerüsten aufgebracht wird, so daß die Walztemperatur am letzten Walzgerüst auf oder nahe dem vorbestimmten Wert bleibt; dadurch gekennzeichnet, daß das Profil des das letzte Walzgerüst verlassenden Streifens detektiert wird und eine Veränderung gegenüber dem gewünschten Profil verwendet wird, um die Menge der Kühlung zwischen den Walzgerüsten während des Walzens zu regeln, um die Walzkraft an einem oder mehreren Walzgerüsten zu verändern, um das Profil des das letzte Walzgerüst verlassenden Streifens auf die gewünschte Form hin zu verändern.

2. Verfahren nach Anspruch 1, dadurch gekennzeichnet, daß die Kühlung zwischen den Walzgerüsten zwischen einem Vorwärts-Modus und einem Rückwärts-Modus während des Walzens des Werkstückes verändert wird.

3. Verfahren nach Anspruch 2, dadurch gekennzeichnet, daß die Menge einer auf die oder jede Stelle zwischen den Walzgerüsten aufgetragenen Flüssigkeit fortlaufend auf ein Maximum erhöht wird, bevor die Flüssigkeit auf eine benachbarte Stelle zwischen den Walzgerüsten aufgebracht wird.

4. Verfahren nach einem vorangegangenen Anspruch, dadurch gekennzeichnet, daß die Flüssigkeit in der Form eines sich über die Breite des Streifens erstreckenden Vorhanges (5) aufgebracht wird.

5. Verfahren nach einem vorangegangenen Anspruch, dadurch gekennzeichnet, daß die Kühlflüssigkeit nur auf einen Abschnitt der Breite des Streifens an der oder jeder Stelle aufgebracht wird.

6. Verfahren nach einem vorangegangenen Anspruch, dadurch gekennzeichnet, daß Kühlflüssigkeit auf die Walzen aufgebracht wird.

7. Verfahren nach Anspruch 6, dadurch gekennzeichnet, daß die Fließgeschwindigkeit der auf die Walzen aufgebrachten Flüssigkeit über

EP 0 449 868 B1

die Breite der Walzen verändert wird.

8. Verfahren nach einem vorangegangenen Anspruch,
dadurch gekennzeichnet, daß die Arbeitswalzen von einem oder mehreren Walzgerüsten gebogen werden.

**Revendications**

1. Procédé de fonctionnement d'un laminoir à chaud à plusieurs cages, dans lequel l'extrémité avant d'une pièce à usiner en métal chaud est passée, à une vitesse relativement lente, par les cages (F1, F2, F3, F4, F5, F6, F7) du laminoir et l'effort de laminage à chaque cage est réglé de façon à assurer que le profil requis de la bande soit obtenu à l'issu du passage dans la dernière cage (F7) et la température de laminage à la dernière cage est située à, ou près d'un niveau prédéterminé; la vitesse de laminage est ensuite augmentée et un liquide de refroidissement est appliqué sur la pièce à usiner, en des emplacements situés entre les cages, afin de la refroidir, de sorte que la température de laminage à la dernière cage reste au, ou près dudit niveau prédéterminé; caractérisé en ce que le profil de la bande quittant la dernière cage est détecté et les fluctuations par rapport au profil requis sont utilisées pour régler la quantité de refroidissement entre les cages pendant le laminage, de façon à modifier l'effort de laminage sur une ou plusieurs des cages, afin de modifier le profil de la bande quittant la dernière cage pour obtenir la forme requise.

2. Procédé selon la revendication 1, caractérisé en ce que le refroidissement entre les cages est modifié suivant que l'on se trouve en mode de progression avant ou arrière, pendant le laminage de la pièce à usiner.

3. Procédé selon la revendication 2, caractérisé en ce que la quantité de liquide appliquée à l'emplacement entre les cages ou à chaque emplacement entre les cages est augmentée progressivement, jusqu'à un maximum, avant l'application du liquide en un emplacement entre les cages adjacent.

4. Procédé selon l'une quelconque des revendications précédentes, caractérisé en ce que le liquide est appliqué sous la forme d'un rideau (5) s'étendant sur la largeur de la bande.

5. Procédé selon l'une quelconque des revendications précédentes, caractérisé en ce que le réfrigérant liquide est applique seulement sur une partie de la largeur de la bande à l'emplacement considéré ou à chaque emplacement considéré.

6. Procédé selon l'une quelconque des revendications précédentes, caractérisé en ce que le réfrigérant liquide est appliqué aux rouleaux de laminage.

7. Procédé selon la revendication 6, caractérisé en ce que le débit de liquide applique aux rouleaux es: modifie suivant la position de l'application sur la largeur des rouleaux.

8. Procédé selon l'une quelconque des revendications précédentes, caractérisé en ce qu'un cintrage d'un rouleau travailleur est réalisé sur les rouleaux travailleurs d'une ou plusieurs des cages.

7